# EUROPEAN PATENT SPECIFICATION

(11) **EP 0 183 818 B1**
(45) Date of publication and mention of the grant of the patent: **10.02.1993**
(21) Application number: 85903098.3
(22) Date of filing: 24.05.1985
(51) Int. Cl.: G21G 4/06, G02B 5/00

(54) **FAST NEUTRON MODERATOR FOR ACCELERATOR IN THERMAL NEUTRON RADIOGRAPHY SYSTEM**
SCHNELLER NEUTRONENMODERATOR FÜR BESCHLEUNIGER IN EINEM NEUTRONENRADIOGRAPHIESYSTEM
MODERATEUR DE NEUTRONS RAPIDES POUR UN ACCELERATEUR D'UN SYSTEME DE RADIOGRAPHIE A NEUTRONS THERMIQUES

(30) Priority: 01.06.1984 US 615960
(43) Date of publication of application: 11.06.1986
(73) Proprietor: Loral Vought Systems Corporation, Grand Prairie, Texas 75051 (US)
(72) Inventor: DANCE, William, E., Dallas, TX 75229 (US); CAROLLO, Sammy, F., Irving, TX 75062 (US)
(74) Representative: KUHNEN, WACKER & PARTNER
(86) International application number: US8500964
(87) International publication number: WO8505727

(56) References cited:
- DE-C- 729 299
- FR-A- 2 243 504
- GB-A- 608 646
- US-A- 3 152 961
- US-A- 3 786 258
- US-A- 4 124 834
- US-A- 4 134 016
- US-A- 4 300 054
- US-A- 4 437 082
- NUCLEAR INSTRUMENTS AND METHODS, vol. 92, No. 4, issued 1971, North-Holland Publishing Company, A.R. Spowart, "Use of a 10 11 n/sec Neutron Generator for Neutron Radiography", see pages 613-617.
- NUCLEAR TECHNOLOGY, vol. 14, No. 3, issued June 1972, "Thermal-Neutron Radiography with a Sealed Tube Neutron Generator and Water Moderator", see pages 279-283.

## Description

This invention relates to a neutron radiography device according to the first part of claim 1 and to method for neutron generation according to the first part of claim 9. Such a device and method are known from US-A-4,300,054.

Neutron ray generators have been developed for a variety of uses. Most conventional neutron generation systems are employed in the technique of neutron activation analysis in which high speed (fast) neutrons generated by directing an ion beam in an accelerator tube are directed at a suitable target which then emits high energy neutrons. The composition of the test material irradiated with high energy neutrons is determined by analyzing the emissions from the test material.

In other applications, such as neutron radiography, high energy (fast) neutrons are not suitable, and such fast neutrons must be reduced to low energy (thermal) neutrons by discharging a high energy neutron beam into a suitable moderator medium. Because the thermalized neutrons produced in the moderator medium are randomly scattered and isotropic, a directional component of the thermal neutrons must be collected to provide a directed neutron beam. Further, because substantial background neutron, x-ray and gamma-ray radiation cannot be tolerated in neutron radiography, a thermal neutron collimator is needed for providing a highly directed thermal neutron beam without substantial background thermal neutron, x-ray, gamma-ray or fast neutron radiation.

A neutron radiography inspection device of the ion accelerator type is disclosed in U.S. Patent No. US-A-4 300 054 to William E. Dance, one of the inventors of the present invention. In this inspection device, a housing contains a liquid moderator with a neutron source positioned therein. A collimator is mounted in the moderator housing and extracts a beam of thermal neutrons generated from the moderating source which results from the bombardment of hydrogen protons in the moderator by high energy neutrons emitted from an ion accelerator neutron tube.

In this prior inspection device, the ion accelerator neutron tube is comprised of a sealed evacuated tube having a positive ion source near one end and an appropriate target, such as a tritium target, mounted on an extension from the opposite end. The main body of the evacuated tube is surrounded by a housing and an air gap exists between the evacuated tube and the housing. The accelerator tube is positioned with the target end within the moderator housing and with the ion source end extending externally of the moderator housing. The accelerator tube is adjustable for movement relative to the moderator housing such that the target may be adjusted relative to the collimator inlet. As a result of this construction, leakage of fast neutron radiation may occur through the opening in the moderator housing through which the accelerator tube is mounted.

From DE-A-729 299 a neutron radiography device is known for producing thermal neutron radiographes. The described system encompasses an ion source having a top plate being mounted on an isolation means. To said ion source a high voltage is applied for accelerating ions in the direction of a first annular shaped electrode which is on ground potential. Below said annular shaped electrode, there is provided a second electrode to which an additional voltage is applied for further accelerating the ions. The ion beam emanates through the first electrode and thereafter through the second electrode and hits a target serving as a neutron source which is disposed within a hollow body. The problem document DE-A-729 299 is dealing with is to electrically shield the neutron source which is on a considerable high potential and to decelerate at the same time the fast neutrons emanating from the target to a "thermal velocity".

This object is solved by inserting the neutron generator system in a casing and filling the casing with a neutron moderating and electrically insulating material.

However, also in the device in accordance with document DE-A-729 299 leakage of fast neutron radiation may occur through the opening in the casing through which the accelerator tube is mounted.

Thus, a need has arisen for a design which eliminates or effectively reduces the excessive leakage of radiation from the accelerator port in the moderator housing.

This object is solved by a neutron radiography device in accordance with claim 1 and with a method of neutron generation in accordance with claim 9.

The space between the evacuated tube and the accelerator housing exists substantially completely around the tube and is filled with an hydrogeneous, electrically insulative fluid such as insulative transformer fluid, generally a high purity mineral oil. In one embodiment, the space is an annular gap continuous around the evacuated tube. The oil is circulated through the space using a suitable pump system.

The presence of the moderating oil in the space between the evacuated tube and the accelerator housing adds to the moderator material in proximity to the target where the fast neutrons are produced. Thus, the use of the oil in this location enhances the number of available thermal neutrons for radiography. Further, the oil positioned in the space between the evacuated tube and the accelerator housing provides a shielding material in close proximity to the source. This positioning of the shielding material provides the most efficient use of the material per unit volume of weight. Further, the use of the oil as described provides electrical insulation against the high potential across the evacuated tube.

A moderator material surrounds the output portion of the neutron tube for rapidly diffusing the fast neutron energy and to randomly scatter thermal neutron energy. The collimator tube is provided with a relatively narrow neutron permeable input window disposed in the moderator material for admitting neutrons traveling generally parallel to the axis of the tube. The walls of the tube are formed of a three-ply material in which an outer layer of cadmium is provided for absorbing off-axis thermal neutrons, an intermediate layer of lead is provided for absorbing x-rays and gamma rays and an inside layer of aluminum is provided for structural support.

The collimator is used to extract a beam of thermal neutrons from the moderator source. The inlet end of the collimator is enclosed by a suitable window and the outlet end is covered by a suitable dust cover. The collimator window permits thermal neutrons to pass through it while preventing moderator fluid from moving out of the housing.

For a more complete understanding of the present invention, and for further details and advantages thereof, reference is now made to the following Detailed Description taken in conjunction with the accompanying Drawings, in which:
FIGURE 1 is a partially broken away plan view of the neutron radiography inspection device of the present invention;
FIGURE 2 is an enlarged section view of the neutron generator adjustment structure;
FIGURE 3 illustrates the transverse adjustment of the collimator as seen from along lines 3-3 of FIGURE 1;
FIGURE 4 illustrates the collimator as seen from along lines 4-4 of FIGURE 3; and
FIGURE 5 is a partially broken away plan view of an alternative embodiment of the neutron radiography inspection device shown in FIGURE 1.

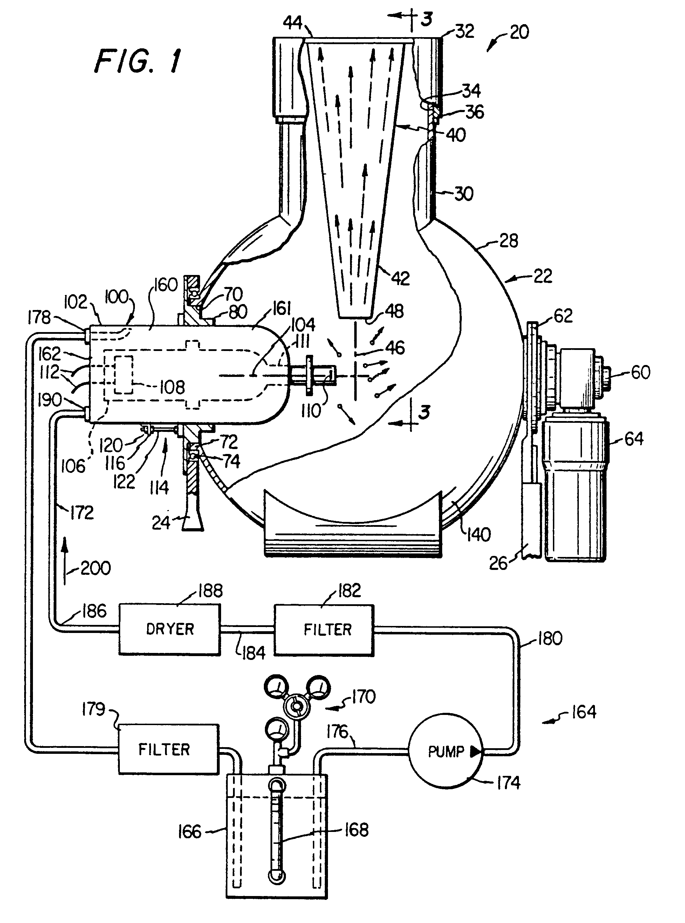

Referring to FIGURE 1, neutron radiography inspection device 20 is illustrated in a partially broken away plan view. Inspection device 20 includes an inspection head 22 pivotally supported from support arms 24 and 26. Head 22 includes a spherical main body 28 with a cylindrical collimator support housing 30 extending therefrom. A cap 32 is threadedly engaged on the end of collimator support housing 30. Cap 32 has internal threads 34 which mate with threads 36 on the exterior of support housing 30. As will be described hereinafter in greater detail, collimator 40 is attached to cap 32 at the uppermost end as seen in FIGURE 1.

Collimator 40 includes a generally rectangular hollow tube having four side walls 42, a top flange 44 and a bottom wall with a neutron beam defining inlet aperture 48. Collimator 40 has a longitudinal axis 46. As is seen in FIGURE 1, side walls 42 diverge at a constant rate in the downstream direction of the tube from aperture 48. Aperture 48 includes a neutron permeable material which acts as an inlet window for the thermal neutrons. At its diverging end, the collimator tube is open to form an outlet for the collimated thermal neutron beam.

In the preferred embodiment, side walls 42 are formed of a laminated three-ply material comprised of an outer layer of cadmium, an intermediate layer of lead and an inside layer of lightweight aluminum. The inside layer of lightweight aluminum, which provides structural support, has minimum thickness necessary to support the weight of the collimator and the absorbing material bonded to the surface thereof. For a collimator approximately 76 cm (30 inches) long, for example, the aluminum layer is approximately 1.6 mm (0.063 inches) thick. An aluminum cup 50 is attached to the end of collimator 40 over aperture 48 to provide an air gap at the end of the collimator. Cup 50, which serves as the inlet window, is constructed without any cadmium liner as is used in the collimator. The purpose of the cup is to separate the neutron absorbent collimator liner from the neutron source. This is accomplished by separating the cadmium liner from both the neutron generator target and from the effective source surface of the moderator fluid. The use of such an air gap has been found to be advantageous in producing a more uniform neutron energy spectrum. Further, by separating the neutron generator target from the cadmium layer, gamma radiation is reduced.

Inspection head 22 is supported on one side by arm 26 by the journaling of shaft 60 extending from head 22 through an appropriate bearing structure 62. A drive motor 64 is also mounted for turning shaft 60 to rotate inspection head 22.

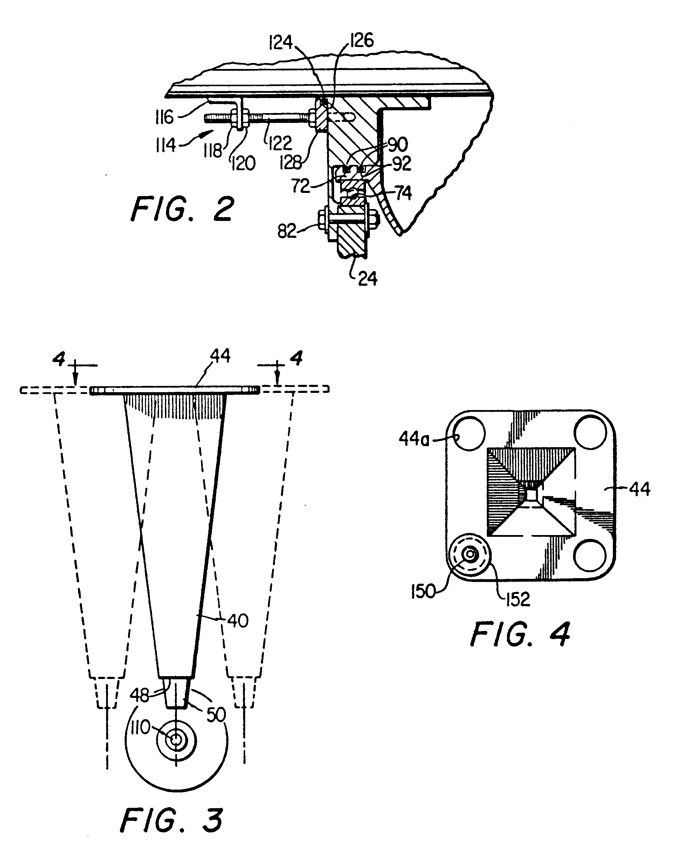

An opening 70 is provided in head 22 and is coaxially aligned with shaft 60 in the opposite side of the housing from shaft 60. Opening 70 is provided with an axially extending flange 72 which is supported by bearings 74 (FIGURES 1 and 2) carried in support arm 24. Accordingly, upon activation of drive motor 64, head 22 is rotated about its horizontal axis on support bearings 74 and bearing structure 62.

A relatively large opening is defined by flange 72 concentric with the rotational axis of the housing. An annular flange hub 80 is attached to support arms 24 by appropriate bolts 82 (FIGURE 2) and is fitted within the opening defined by flange 72. Sealing means, such as O-rings 90, are carried in annular grooves 92 in the innerface of the radially extending flange 72 to provide sealing engagement between flange 72 and flange hub 80. A neutron generator 100 having an elongated housing 102 is mounted with its longitudinal axis 104 coincident with the axis of rotation of inspection head 22. Housing 102 contains an elongated evacuated tube 106 having a positive ion source 108 near one end thereof and an appropriate target 110, such as a tritium target, mounted on an extension 111 from tube 106. Upon bombardment by ions generated in tube 106, the target emits high energy neutrons.

As can be seen in FIGURE 1, evacuated tube 106 is supported substantially coaxially with elongated housing 102 to provide a continuous space 160 therebetween. Space 160 consists of an annular space 161 between the cylindrical wall of the evacuated tube and accelerator housing 102, and a gap 162 between the ion source end of evacuated tube 106 and the end wall of housing 102. Effectively, the only area between evacuated tube 106 and housing 102 where no space exists is that occupied by extension 111 from the tube, through housing 102 for supporting the target 110. A system 164 is provided for circulating an hydrogenous, electrically insulative liquid, such as insulative transformer fluid, generally a mineral oil, in the space provided between the evacuated tube 106 and housing 102. Use of liquids having a high hydrogen atom count per unit volume provides a liquid which will serve as an appropriate moderator for fast neutrons. Further, a suitable liquid will be one having electrically insulative properties adequate for high voltage insulation.

System 164 includes a reservoir 166 having a level indicator 168 and appropriate regulation gauges 170 mounted thereto. Reservoir 166 is in fluid communication with housing 102 by way of fluid discharge line 172 which has one end connected to a dicharge outlet 178 in housing 102. A filter 179 is positioned in line 172. A pump 174 is connected to receive fluid from reservoir 166 by way of line 176. Fluid is furnished from pump 174 through line 180 to filter 182 and through lines 184 and 186 by way of dryer 188 to an inlet port 190 in housing 102. As can be seen in FIGURE 1, the flow of liquid circulating through system 164 is in the direction of arrow 200.

Filters 179 and 182 maintain the moderating liquid free from contamination which would affect the electrical insulative properties of the fluid. Dryer 188 removes moisture from the fluid for the same reason. It has been found, however, that the system may be successfully operated without the use of dryer 188. Operation without filters 179 and 182 may also be possible under certain conditions.

Although various types of neutron sources may be employed in thermal neutron radiography applications, an on/off switchable ion source is desirable because of the hazards of conventional continuous radioisotopic sources. Illustrative of generators of the on/off type is the sealed tube 14 MeV neutron generator such as Model A-711 manufactured by Kaman Sciences Corporation. This neutron generator comprises an elongated cylindrical housing with a target at one end and a plurality of high voltage inputs 112 at the opposite end. Voltages can thereby be selectively applied to the accelerator tube to generate 14 MeV fast neutrons when desired.

Referring to FIGURE 1 in conjunction with FIGURE 2, neutron generator 100 may be moved along its longitudinal axis 104 by the adjustment structure 114 provided. The adjustment structure includes an angle fitting 116 attached to the outer wall of neutron generator housing 102. An appropriate bolt has one end engaged within flange hub 80 and the opposite end passing through an aperture in the out-turned leg of angle fitting 116. Nuts 118 and 120 are engaged on the threaded end of shaft 122 and by adjusting nuts 118 and 120, the neutron generator may be moved inwardly or outwardly along its longitudinal axis. An appropriate seal 124 is positioned in a groove 126 defined in ring 128 attached circumferentially around neutron generator housing 102 and adjacent flange hub 80. Seal 124 acts to provide a fluid-tight seal between flange hub 80 and neutron generator housing 102.

Referring to FIGURES 3 and 4, collimator 40 provides a flange 44 which encircles the large end opening of the collimator. This flange has four large apertures 44a formed therethrough at spaced points of the flange. Retaining bolts 150, with washers 152, are engageable into a receiving flange attached to cap 32 to fix the collimator to cap 32. Because of the relative size between apertures 44a and bolts 150, collimator 40 may be adjusted laterally relative to cap 32 to offset the window 48 relative to the target end of neutron generator 100. Thus, the window inlet of collimator 40 may be positioned an appropriate distance relative to the longitudinal axis of neutron generator 100.

The high energy (fast) neutrons emitted by target 110 are not suitable for thermal neutron radiography. Accordingly, the energy must be reduced by suitable moderation to provide lower energy thermal neutrons. Moderation of fast neutrons is accomplished by submerging the target 110 in a moderator fluid such as water or a suitable organic fluid such as high purity transformer oil. Accordingly, inspection head 22 is filled with a suitable moderator fluid 140. The high energy neutrons emitted by the target collide with the hydrogen protons in the moderator fluid giving up energy to the fluid as they diffuse therethrough. The radius of the spherical body 28 is determined by the energy of the fast neutrons admitted in the moderator fluid so that the neutrons emitted from the target will be effectively moderated or thermalized by multiple collisions by the time they diffuse to the inlet aperture 48 of the collimator 40.

Because the present invention envisions an arrangement permitting the adjustment of housing 102 into and out of inspection head 22 so that target 110 may be moved relative to the collimator inlet, a port of entry defined by opening 70 is provided through the side wall of head 22. Further, the ion source, being positioned in the end of the evacuated tube removed from the target 110 is generally positioned exteriorly of the inspection head. In prior art devices, excessive leakage of radiation has occurred through this port of entry resulting in a "hot spot" of leakage of radiation from the housing. In the present invention, moderating fluid is continuously circulated within the space 160 between the evacuated tube 106 and housing 102 and provides shielding material in close proximity to the neutron source, which is the most efficient use of shielding material from a volume and weight standpoint. The moderating liquid replaces an insulating gas, such as SF₆, which is normally used between the evacuated tube and the accelerator housing. The existence of the moderator fluid adds to the total quantity of moderator liquid in proximity of the target where fast neutrons are produced. Thus, the positioning of fluid in this location enhances the number of available thermal neutrons for radiography. Additionally, the positioning of moderator liquid provides electrical insulation against the high potential across the evacuated tube.

The use of the present method and apparatus eliminates the existence of a heretofore concentrated radiation leakage area from the moderator housing and provides a system where radiation leakage, to the extent that leakage does occur in the system, is in a uniform, low pattern from all directions around the housing. The use of the internal moderator shielding as taught by the present invention eliminates the necessity for adding additional protrusions external to the already protruding tube assembly, which would otherwise be required. The implementation of the present system is, as described above, by way of a filtered closed-loop oil circulating system consisting of a reservoir, electric pump, filter unit, and associated transport tubing which mates with the accelerator housing.

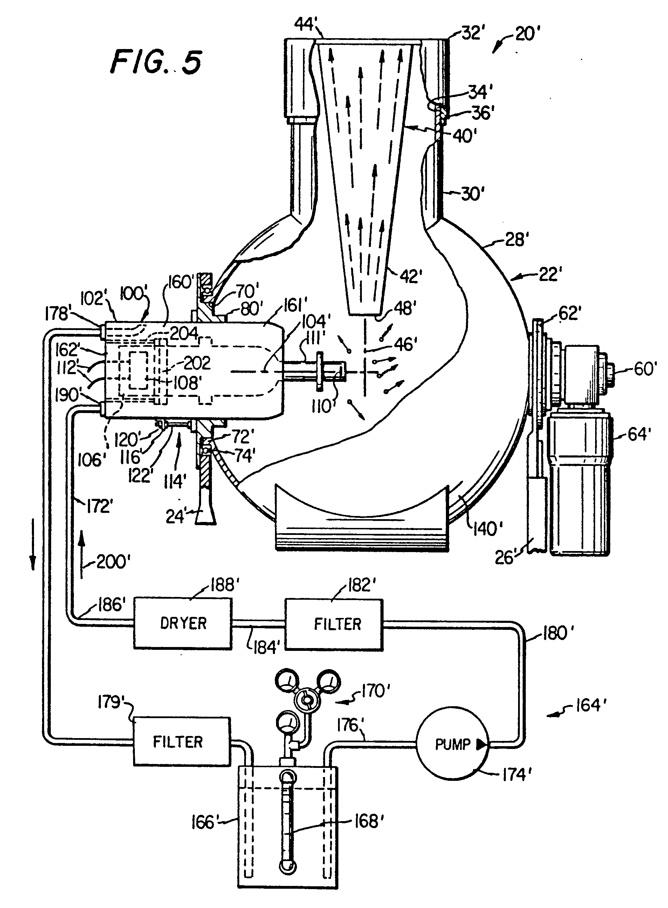

FIGURE 5 shows an alternative embodiment for neutron generator 100. Components of the apparatus of FIGURE 5 corresponding to the components of the device of FIGURE 1 are identified using the same number but with the addition of the prime (') designation. As can be seen in FIGURE 5, neutron generator 100' has a housing 102' which extends into inspection head 22' but is open such that the fluid within the housing is free to circulate with the moderator fluid within the inspection head. In this embodiment, evacuated tube 106' is supported from the end wall of housing 102' by plurality of arms 204 extending into the housing and supporting a ring support 202 in which the evacuated tube is fixedly received.

In this embodiment, the fluid used within the inspection head is of an hydrogeneous electrically insulative liquid, such as insulative transformer fluid, generally a mineral oil. Thus, although water would serve as the moderating fluid for the moderating head, in this application where the fluid circulated adjacent to the evacuated tube of the neutron generator is the same as that in the moderator housing, an electrically insulative moderator liquid is used.

Although preferred embodiments of the invention have been described in the foregoing detailed description and illustrated in the accompanying drawings, it will be understood that the invention is not limited to the embodiments disclosed, but is capable of numerous rearrangements, modifications, and substitutions of parts and elements without departing from the scope of the claims.

## Claims

1. A neutron radiography device (22; 20') having a maneuverable inspection head (22; 22') comprising:
a neutron generator (100; 100') supported by said inspection head (22; 22'), said head (22; 22') having moderation fluid (140; 140') therein;
collimator means (40; 40') for directing thermal neutrons to provide a thermal neutron radiograph; said neutron generator (100; 100') comprising
housing means (102; 102') having a portion extending exteriorly of said head (22; 22');
an evacuated tube (106; 106') with at least a portion thereof within said housing (102; 102'), said tube (106; 106') having an ion source (108; 108') substantially at one end in said tube (106; 106') and a neutron emitting target (110; 110') at a spaced location from said ion source (108; 108') and within said inspection head (22; 22'), characterized in that
said tube (106; 106') being positioned within said housing to define a space (160, 161, 162; 160', 161', 162') between said tube (106; 106') and said generator housing (102; 102') which exists substantially completely around said tube (106; 106'), said space being filled with neutron moderating liquid.

2. The neutron radiography device according to claim 1 wherein said space (160, 161, 162; 160', 161', 162') between said housing (102; 102') and tube (106; 106') exists substantially at all points between said tube and housing where said housing is exterior of the inspection head (22; 22').

3. The neutron radiography device according to claim 1 further comprising:
pump means (174; 174') for circulating said fluid through the space between the tube and said housing.

4. The neutron radiography device according to claim 2 further comprising:
filter means (179, 182; 179', 182') for filtering said fluid as it is circulated through said housing (102; 102').

5. The neutron radiography device according to claim 1 wherein the moderating liquid in said evacuated tube (106; 106') is in fluid communication with the moderating fluid (140; 140') in the inspection head (22') and wherein said neutron moderating liquid in said tube is the same as the moderating fluid in the inspection head.

6. The neutron radiography device according to claim 1 wherein said collimator means (40; 40') is supported with one end within said inspection head (22; 22') and said generator housing (102; 102') is mounted with one end within said inspection head.

7. The neutron radiography device according to claim 1, wherein said space (160, 161, 162; 160', 161', 162') is substantially filled with an hydrogeneous, electrically insulative liquid for moderating fast neutrons.

8. The neutron radiography device according to claim 1, wherein said generator housing (102; 102') is adjustably movable into and out of said inspection head (22; 22') such that a portion of said housing may be within said head with a portion exterior of said head.

9. A method of neutron generation for use in neutron radiography, said method comprising the steps of:
generating a high energy neutron beam in an evacuated tube (106; 106'), said evacuated tube (106; 106') having an outlet (111; 111') positioned in an inspection head (22; 22') and a portion extending exteriorly of said head (22; 22') and further having an ion source (108; 108') being positioned substantially in said portion extending exteriorly of said head (22; 22') and a neutron emitting target (110; 110') at a spaced location from said ion source (108; 108') and within said inspection head (22; 22');
moderating said neutron beam by surrounding the evacuated tube with a housing (102; 102') having a portion extending inside said inspection head (22; 22');
and emerging said portion in a neutron moderating liquid (140; 140'), characterized in that
said neutron beam is further moderated by a hydrogeneous, electrically insulative liquid filling a space (160, 161, 162; 160', 161', 162') which is defined between said housing (102; 102') and said tube (106; 106') and which substantially completely surrounds said tube (106; 106').

## Patentansprüche

1. Eine Neutronen-Radiographieeinrichtung (22; 20'), welche einen manövrierbaren Inspektionskopf (22; 22') aufweist, mit:
einem Neutronengenerator (100; 100'), welcher von dem Inspektionskopf (22; 22') getragen wird, wobei der Kopf (22; 22') in sich eine Moderatorflüssigkeit (140; 140') aufweist;
Kollimator-Vorrichtungen (40; 40'), um thermische Neutronen zu führen, um für einen thermischen Neutronenradiographen zu sorgen, wobei der Neutronengenerator (100; 100') aufweist
Gehäusevorrichtungen (102; 102'), welche einen Teil auweisen, der sich aus dem Kopf (22; 22') heraus erstreckt;
eine evakuierte Röhre (106; 106'), von der sich wenigstens ein Teil innerhalb des Gehäuses (102; 102') befindet, wobei die Röhre (106; 106') eine Ionenquelle (108; 108') aufweist, die sich im wesentlichen bei einem Ende der Röhre (106; 106') befindet, sowie ein neutronenemittierendes Target (110; 110'), das sich bei einem Ort versetzt von der Ionenquelle (108; 108') und innerhalb des Inspektionskopfes (22; 22') befindet, dadurch gekennzeichnet, daß
die Röhre (106; 106') innerhalb des Gehäuses angeordnet ist, um einen Raum (160, 161, 162; 160', 161', 162') zwischen der Röhre (106; 106') und dem Generatorgehäuse (102; 102') zu definieren, der im wesentlichen vollständig um die Röhre (106; 106') herum vorhanden ist, wobei der Raum mit neutronenmoderierender Flüssigkeit gefüllt ist.

2. Die Neutronen-Radiographieeinrichtung nach Anspruch 1, worin der Raum (160, 161, 162; 160', 161', 162') zwischen dem Gehäuse (102; 102') und der Röhre (106; 106') im wesentlichen bei all den Punkten zwischen der Röhre und dem Gehäuse existiert, bei denen sich das Gehäuse außerhalb des Inspektionskopfes (22; 22') befindet.

3. Die Neutronen-Radiographieeinrichtung nach Anspruch 1, welche des weiteren aufweist:
Pumpvorrichtungen (174; 174') zum Umwälzen der Flüssigkeit durch den Raum zwischen der Röhre und dem Gehäuse.

4. Die Neutronen-Radiographieeinrichtung nach Anspruch 2, welche des weiteren aufweist:
Filtervorrichtungen (179, 182; 179', 182') zum Filtern der Flüssigkeit, wenn sie durch das Gehäuse (102; 102') umgewälzt wird.

5. Die Neutronen-Radiographieeinrichtung nach Anspruch 1, worin die Moderatorflüssigkeit in der evakuierten Röhre (106; 106') sich in Flüssigkeitsaustausch mit der Moderatorflüssigkeit (140; 140') in dem Inspektionskopf (22') befindet und worin die Neutronen-Moderatorflüssigkeit der Röhre die gleiche ist wie die Moderatorflüssigkeit in dem Inspektionskopf.

6. Die Neutronen-Radiographieeinrichtung nach Anspruch 1, worin die Kollimator-Vorrichtungen (40; 40') mit einem Ende innerhalb des Inspektionskopfes (22; 22') getragen werden und worin das Generatorgehäuse (102; 102') mit einem Ende innerhalb des Inspektionskopfes befestigt ist.

7. Die Neutronen-Radiographieeinrichtung nach Anspruch 1, worin der Raum (160, 161, 162; 160', 161', 162') im wesentlichen mit einer wasserstoffhaltigen, elektrisch isolierenden Flüssigkeit zum Moderieren schneller Neutronen gefüllt ist.

8. Die Neutronen-Radiographieeinrichtung nach Anspruch 1, worin das Generatorgehäuse (102; 102') in den Inspektionskopf (22; 22') hinein und aus ihm heraus justierbar beweglich ist, so daß sich ein Teil des Gehäuses innerhalb des Kopfes befinden kann und wobei ein Teil sich außerhalb des Kopfes befinden kann.

9. Ein Verfahren für die Erzeugung von Neutronen zur Verwendung in der Neutronen-Radiographie, wobei das Verfahren die Schritte aufweist:
Erzeugen eines hochenergetischen Neutronenstrahles in einer evakuierten Röhre (106; 106'), wobei die evakuierte Röhre (106; 106') einen Auslaß (111; 111') aufweist, der in einem Inspektionskopf (22; 22') angeordnet ist, und einen Teil, der sich außerhalb des Kopfes (22; 22') erstreckt, und die des weiteren eine Ionenquelle (108; 108') aufweist, die sich im wesentlichen in dem Teil befindet, der sich außerhalb des Kopfes (22; 22') erstreckt, und ein neutronenemittierendes Target (110; 110'), das sich in einem Abstand von der Ionenquelle (108; 108') und innerhalb des Inspektionskopfes (22; 22') befindet;
Moderieren des Neutronenstrahles, indem die evakuierte Röhre mit einem Gehäuse (102; 102') umgeben wird, das einen Teil aufweist, der sich in den Inspektionskopf (22; 22') erstreckt; und
Eintauchen des Teiles in eine neutronenmoderierende Flüssigkeit (140; 140'), dadurch gekennzeichnet, daß
der Neutronenstrahl darüber hinaus mittels einer wasserstoffhaltigen, elektrisch isolierenden Flüssigkeit moderiert wird, welche einen Raum (160, 161, 162; 160', 161' 162') füllt, der zwischen dem Gehäuse (102; 102') und der Röhre (106; 106') definiert ist und der im wesentlichen die Röhre (106; 106') vollständig umgibt.

## Revendications

1. Dispositif de neutrographie (20 ; 20') comprenant une tête d'examen (22 ; 22') qui peut être manoeuvrée et qui comprend : un générateur de neutrons (100 ; 100') porté par ladite tête d'examen (22 ; 22'), ladite tête (22 ; 22') comprenant intérieurement un fluide modérateur (140 ; 140') ; un moyen formant collimateur (40 ; 40') destiné à orienter des neutrons thermiques en vue de fournir une neutrographie à neutrons thermiques ; ledit générateur de neutrons (100 ; 100') comprenant un moyen formant enveloppe (102 ; 102'), et celui-ci présentant une partie qui s'étend à l'extérieur de ladite tête (22 ; 22') ; un tube sous vide (106 ; 106') dont une partie au moins est à l'intérieur de ladite enveloppe (102 ; 102'), ledit tube (106 ; 106') comprenant une source d'ions (108 ; 108') sensiblement à une extrémité dudit tube (106 ; 106') et une cible émettrice de neutrons (110 ; 110') en un endroit éloigné de ladite source d'ions (108 ; 108') et à l'intérieur de ladite tête d'examen (22 ; 22'), caractérisé par le fait que ledit tube (106 ; 106') est placé à l'intérieur de ladite enveloppe de manière à définir entre ledit tube (106 ; 106') et ladite enveloppe (102 ; 102') du générateur un espace (160, 161, 162 ; 160', 161', 162') qui existe de manière sensiblement complète autour dudit tube (106 ; 106'), ledit espace étant rempli de liquide modérateur de neutrons.

2. Dispositif de neutrographie selon la revendication 1, dans lequel ledit espace (160, 161, 162 ; 160', 161', 162') compris entre ladite enveloppe (102 ; 102') et ledit tube (106 ; 106') existe sensiblement en tous les points qui sont situés entre ledit tube et ladite enveloppe et où ladite enveloppe est extérieure à la tête d'examen (22 ; 22').

3. Dispositif de neutrographie selon la revendication 1, comprenant en outre des moyens de pompage (174 ; 174') destinés à faire circuler ledit fluide à travers l'espace compris entre le tube et ladite enveloppe.

4. Dispositif de neutrographie selon la revendication 2, comprenant en outre des moyens de filtrage (179, 182 ; 179', 182') destinés à filtrer ledit fluide lorsqu'il est amené à circuler à travers ladite enveloppe (102 ; 102').

5. Dispositif de neutrographie selon la revendication 1, dans lequel le liquide modérateur contenu dans ledit tube sous vide (106 ; 106') est en communication hydraulique avec le fluide modérateur (140 ; 140') contenu dans la tête d'examen (22 ; 22'), et dans lequel ledit liquide modérateur de neutrons contenu dans ledit tube est le même que le fluide modérateur contenu dans la tête d'examen.

6. Dispositif de neutroffraphie selon la revendication 1, dans lequel ledit moyen formant collimateur (40 ; 40') est porté par une extrémité à l'intérieur de ladite tête d'examen (22 ; 22'), et ladite enveloppe (102 ; 102') du générateur est montée en ayant une extrémité à l'intérieur de ladite tête d'examen.

7. Dispositif de neutrographie selon la revendication 1, dans lequel ledit espace (160, 161, 162 ; 160', 161', 162') est sensiblement rempli d'un liquide hydrogéné électriquement isolant destiné à modérer les neutrons rapides.

8. Dispositif de neutrographie selon la revendication 1, dans lequel ladite enveloppe (102 ; 102') du générateur peut être déplacée d'une manière réglable vers l'intérieur et vers l'extérieur de ladite tête d'examen (22 ; 22') d'une manière telle qu'une partie de ladite enveloppe puisse être à l'intérieur de ladite tête, une partie étant extérieure à ladite tête.

9. Procédé pour engendrer des neutrons destinés à être utilisés en neutrographie, ledit procédé comprenant les étapes selon lesquelles on engendre un faisceau de neutrons à haute énergie dans un tube sous vide (106 ; 106'), ledit tube sous vide (106 ; 106') comprenant une sortie (111 ; 111') qui est placée dans une tête d'examen (22 ; 22') et une partie qui s'étend à l'extérieur de ladite tête (22 ; 22'), et comprenant en outre une source d'ions (108 ; 108') sensiblement placée dans ladite partie qui s'étend à l'extérieur de ladite tête (22 ; 22'), ainsi qu'une cible émettrice de neutrons (110 ; 110') en un endroit espacé de ladite source d'ions (108 ; 108') et à l'intérieur de ladite tête d'examen (22 ; 22') ; on modère ledit faisceau de neutrons en entourant le tube sous vide d'une enveloppe (102 ; 102') comportant une partie qui s'étend à l'intérieur de ladite tête d'examen (22; 22') ; et on noie ladite partie dans un liquide modérateur de neutrons (140 ; 140'), caractérisé par le fait que ledit faisceau de neutrons est en outre modéré par un liquide hydrogéné électriquement isolant remplissant un espace (160, 161, 162 ; 160', 161', 162') qui est défini entre ladite enveloppe (102 ; 102') et ledit tube (106 ; 106') et qui entoure ledit tube (106 ; 106') d'une manière sensiblement complète.
